# DEMANDE DE BREVET EUROPEEN

(11) **EP 4 518 171 A1**
(43) Date de publication de la demande: **05.03.2025**
(21) Numéro de dépôt: 24192820.9
(22) Date de dépôt: 05.08.2024
(51) Int. Cl.: H04B 5/77

(54) **PROCÉDÉ DE DÉBOGAGE MIS EN OEUVRE PAR UN DISPOSITIF NFC**

(30) Priorité: 17.08.2023 FR 2308742
(71) Demandeur: STMicroelectronics International N.V., 1228 Plan-les-Ouates, Geneva (CH)
(72) Inventeur: MARGARIA, Lucile, 13119 SAINT SAVOURNIN (FR); ALARY, Philippe, 13114 PUYLOUBIER (FR); MERCIER, Julien, 13105 MIMET (FR)
(74) Mandataire: Cabinet Beaumont

(57) **Abrégé**

La présente description concerne un procédé de débogage mis en oeuvre par un premier dispositif NFC (110) comprenant : stocker, dans une mémoire du premier dispositif NFC (110), un ou plusieurs paramètres, associés au fonctionnement du premier dispositif (110) lors d'une communication avec un deuxième dispositif NFC (150) distant.

## Description

### Domaine technique

La présente description concerne de façon générale les procédés de débogage mis en oeuvre par des dispositifs NFC ainsi que les dispositifs et systèmes NFC mettant en oeuvre ces procédés.

### Technique antérieure

Les dispositifs de communication NFC sont de plus en plus répandus et équipent de nombreux dispositifs électroniques et plus particulièrement les téléphones portables (smartphones).

Les protocoles NFC, comme définis par le forum NFC, permettent la communication entre dispositifs NFC.

Néanmoins, lorsque la communication NFC est perturbée ou impossible à démarrer, il est aujourd'hui difficile d'en comprendre l'origine.

### Résumé

Il existe un besoin de mettre en oeuvre un procédé de débogage permettant de connaître les conditions qui conduisent à une perturbation de la communication NFC.

Un mode de réalisation pallie tout ou partie des inconvénients des procédés et dispositifs NFC connus.

Un mode de réalisation prévoit un procédé de débogage mis en oeuvre par un premier dispositif NFC comprenant :
stocker, dans une mémoire du premier dispositif NFC, un ou plusieurs paramètres, associés au fonctionnement du premier dispositif lors d'une communication avec un deuxième dispositif NFC distant.

Selon un mode de réalisation, ladite mémoire est une mémoire volatile.

Selon un mode de réalisation, ladite mémoire est une mémoire d'historique.

Selon un mode de réalisation, ladite mémoire est une mémoire non volatile.

Selon un mode de réalisation, lesdits un ou plusieurs paramètres sont des paramètres physiques.

Selon un mode de réalisation, lesdits un ou des paramètres physiques sont associés à une valeur d'un champ électromagnétique reçu par le premier dispositif.

Selon un mode de réalisation, lesdits un ou plusieurs paramètres associés au fonctionnement du premier dispositif sont associés à un état de configuration du premier dispositif.

Selon un mode de réalisation, ledit état de configuration est choisi parmi un état d'horloge, une durée de fin de trame et une séquence temporelle.

Selon un mode de réalisation, le procédé comprend :
- extraire de ladite mémoire lesdits un ou plusieurs paramètres associés au fonctionnement du premier dispositif suite à la réception d'une requête envoyée par le deuxième dispositif distant.

Selon un mode de réalisation, lesdits un ou plusieurs paramètres extraits sont transmis vers le deuxième dispositif dans une trame ATS.

Un mode de réalisation prévoit un dispositif NFC comprenant un ou des circuits configurés pour déterminer un ou plusieurs paramètres associés au fonctionnement du dispositif NFC lors d'une communication avec un deuxième dispositif NFC distant ; le dispositif NFC étant configuré pour mettre en oeuvre le procédé tel que décrit ci-dessus.

Selon un mode de réalisation, lesdits un ou des circuits configurés pour déterminer un ou plusieurs paramètres associés au fonctionnement du premier dispositif NFC sont choisis parmi un capteur délivrant une donnée relative à un champ électromagnétique venant du deuxième dispositif NFC distant et un registre configuré pour enregistrer une alerte.

Un mode de réalisation prévoit un système comprenant :
- un premier dispositif NFC tel que décrit ci-dessus ;
- un deuxième dispositif NFC, distant du premier dispositif NFC.

Selon un mode de réalisation, le système comprend un dispositif configuré pour capter le contenu d'une communication entre le premier dispositif NFC et le deuxième dispositif NFC et en extraire un ou plusieurs paramètres associés au fonctionnement du premier dispositif NFC.

Un mode de réalisation prévoit un procédé de débogage d'un système tel que décrit ci-dessus et comprenant :
- capter le contenu d'une communication entre un premier et un deuxième dispositif NFC avec un dispositif configuré pour capter le contenu d'une communication entre le premier et le deuxième dispositifs NFC ; et
- extraire lesdits un ou plusieurs paramètres de fonctionnement associés au fonctionnement dudit premier dispositif NFC lors de la communication à partir du contenu capté.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente une vue schématique d'un exemple de système de communication NFC ;
la figure 2 représente un procédé de débogage du système de communication NFC de la figure 1 ;
la figure 3 représente un exemple de communication du système de communication NFC de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les systèmes de communication NFC ou autrement dit en champ proche exploitent un champ électromagnétique radiofréquence généré par un dispositif (terminal ou lecteur) pour communiquer avec un autre dispositif (carte). Un même dispositif peut, s'agissant notamment des téléphones portables, fonctionner en mode lecteur en générant un champ à destination d'un autre dispositif, ou en mode carte en captant un champ généré par un autre dispositif. Cette technologie concerne l'établissement de communications à très courte distance (inférieure à une dizaine de centimètres) entre deux dispositifs. Les applications du système NFC sont par exemple les paiements sécurisés ou les cartes de transport par exemple.

Dans la présente description, on considère le cas d'un système dans lequel les dispositifs NFC sont compatibles avec la technologie NFC d'après le Forum NFC.

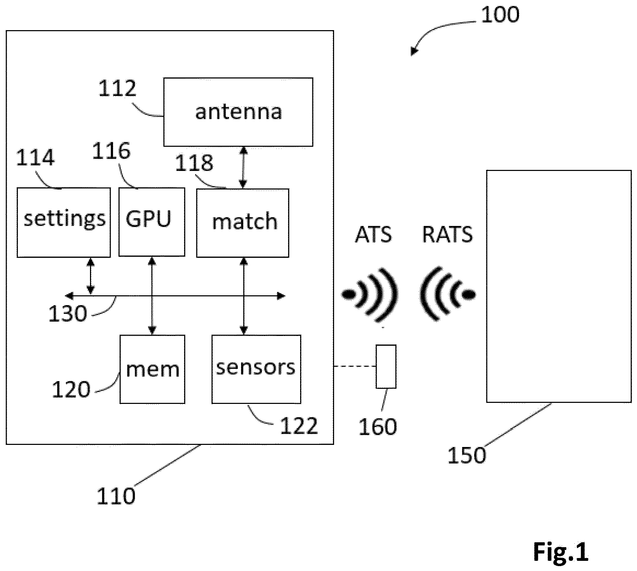

La figure 1 représente une vue schématique d'un exemple de système de communication NFC 100.

Le système de communication NFC 100 comprend un premier dispositif NFC 110 distant et un deuxième dispositif NFC 150 distant.

Le premier dispositif NFC 110 comprend une antenne 112 (antenna) reliée, préférablement connectée, à un circuit d'adaptation d'impédance 118 (match). Le premier dispositif NFC 110 comprend par exemple un contrôleur NFC 116 (GPU) comprenant un ou plusieurs processeurs sous contrôle d'instructions stockées dans une mémoire d'instructions système non représentée. Le premier dispositif NFC 110 comprend par exemple une ou plusieurs mémoires volatiles ou non-volatiles 120 (mem) ainsi qu'un ou des capteurs de paramètres physiques 122 (sensors) et une zone de stockage d'éléments de configuration 114 (settings) modifiables du premier dispositif NFC 110. Le contrôleur NFC 116 (GPU), la ou les mémoires volatiles ou non-volatiles 120 (mem), le ou les capteurs de paramètres physiques 122 (sensors) et la zone de stockage d'éléments de configuration 114 peuvent échanger, via un ou plusieurs bus 130 système, des données, des adresses et des commandes par exemple.

Le dispositif 100 peut en outre intégrer d'autres circuits mettant en œuvre d'autres fonctions (par exemple, une ou plusieurs mémoires volatiles et/ou non-volatiles, d'autres unités de traitement), non représentées en figure 1. Parmi ces autres circuits, le dispositif 100 comporte par exemple une mémoire morte ou statique de type ROM.

Les capteurs 122 sont par exemple configurés pour capter une valeur de champ électro-magnétique au niveau du premier dispositif NFC 110 lors d'une communication avec le deuxième dispositif NFC 150. Dans un autre exemple, une image de la valeur du courant généré est donnée par ce ou ces capteurs avec plus ou moins de précision.

Les éléments de configuration 114 sont par exemple modifiables par l'utilisateur et concernent par exemple un état d'horloge et/ou une séquence temporelle du dispositif 110. La séquence temporelle est par exemple un intervalle de temps de réponse. Les éléments de configuration 114 sont par exemple codés dans un ou des registres.

Le premier et le deuxième dispositif NFC communiquent via des champs électromagnétiques. Lorsque le deuxième dispositif 150 est en mode dit lecteur, il émet un champ électromagnétique et si le premier dispositif NFC 110 est dans un mode dit carte, et passe dans ce champ, l'énergie captée lui permet de s'alimenter et de répondre aux requêtes envoyées par le deuxième dispositif NFC 150.

Parmi les requêtes possibles envoyées par le deuxième dispositif 150 en mode lecteur, il existe une requête appelée RATS (Request Answer To Select). Cette requête appelle une réponse de la part du premier dispositif NFC 110 appelée ATS (Answer To Select). Cette réponse ATS comprend des données qui ne changent pas, autrement dit des données non dynamiques ou non modifiables au cours de la vie du produit, comme par exemple l'identité du dispositif NFC 110.

Dans l'exemple représenté, un dispositif d'enquête 160 (sniff en anglais) est configuré pour capter le contenu d'une communication entre le premier circuit NFC 110 et le deuxième circuit NFC 150. Il permet d'extraire des données envoyées par le premier dispositif NFC 110 à partir du contenu capté.

Dans le cas d'une communication défectueuse, il est aujourd'hui difficile d'avoir accès aux paramètres environnementaux et de fonctionnement du premier dispositif NFC 110 qui ont conduit à un disfonctionnement car ces paramètres ne sont pas stockés et transmis et car souvent les paramètres environnementaux changent rapidement. Le débogage de telles situations est donc difficile et coûteux.

Les modes de réalisation décrits proposent un procédé de débogage, mis en oeuvre par le premier dispositif NFC 110, et comprenant une étape consistant à stocker, dans une mémoire du premier dispositif NFC 110, un ou plusieurs paramètres, associés au fonctionnement du premier dispositif lors d'une communication, par exemple la dernière, avec le deuxième dispositif NFC 150 distant.

Un avantage de ces modes de réalisation tient dans le fait que l'accès aux paramètres de fonctionnement du dispositif NFC 110, qui étaient présents lors de la communication, est facilité puisqu'ils sont stockés et donc plus facilement retrouvés. La résolution de problèmes liés à la communication entre dispositifs NFC est ainsi améliorée.

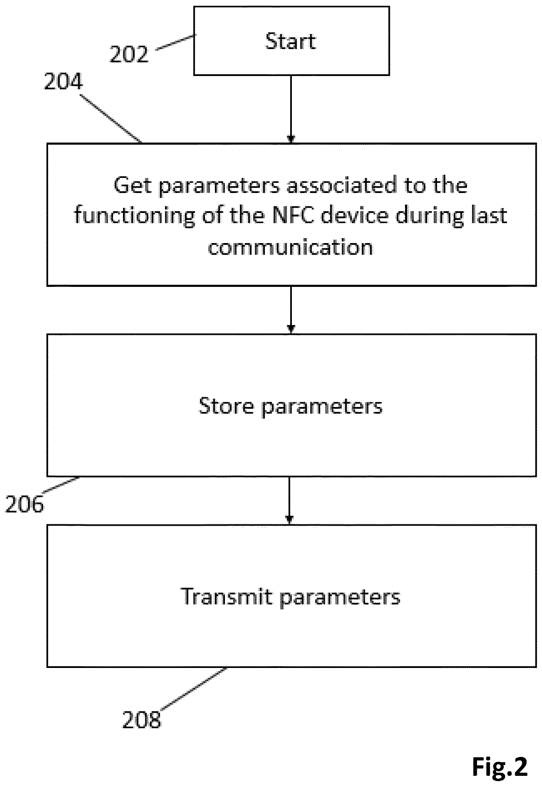

La figure 2 représente un procédé de débogage du système de communication NFC de la figure 1.

Dans une première étape 202 (Start) le procédé commence.

Dans une étape ultérieure 204 (Get parameters associated to the functioning of the NFC device during last communication), les paramètres de fonctionnement de la dernière communication entre le premier et le deuxième dispositifs NFC 110, 150 sont déterminés. Il s'agit par exemple de paramètres physiques issus du ou des capteurs 122 et/ou par exemple de paramètres de configuration 114 choisis par l'utilisateur.

Dans une étape ultérieure 206 (Store parameters), les paramètres de fonctionnement de la dernière communication sont stockés, par exemple dans la mémoire 120 qui est par exemple volatile ou non-volatile.

Dans une étape ultérieure 208 (Transmit parameters) facultative, les paramètres de fonctionnement de la dernière communication stockés sont transmis dans la réponse ATS suite à une requête RATS du deuxième dispositif NFC 150. Dans un exemple, les paramètres de fonctionnement de la dernière communication stockés sont transmis dans une librairie appelée RFlib de la réponse ATS. Après réception par le dispositif 160 ou le deuxième dispositif NFC 150, il est possible d'extraire les paramètres de fonctionnement présents lors de la dernière communication.

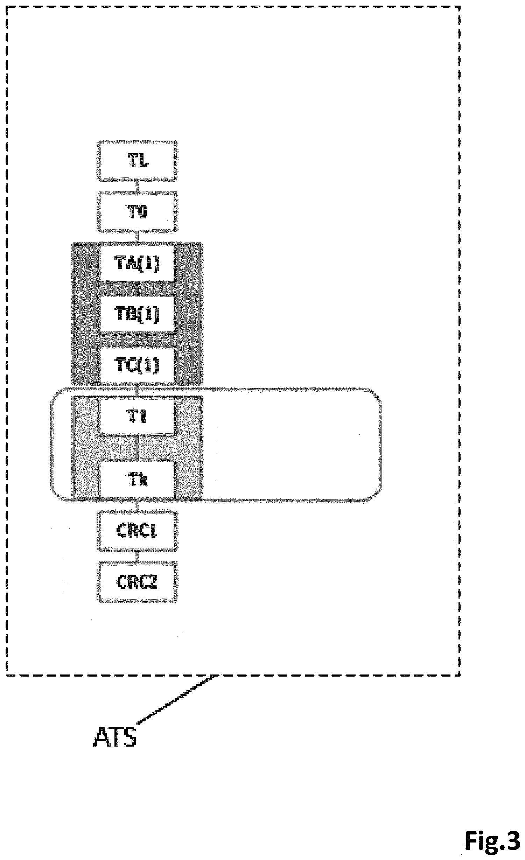

La figure 3 représente un exemple de communication du système de communication NFC de la figure 1.

Plus particulièrement, l'exemple représenté illustre la librairie RFlib de stockage utilisée notamment dans la trame de réponse ATS du premier dispositif NFC 110.

La librairie RFlib représentée comprend des données, par exemple organisées en registres, TL, T0, TA(1), TB(1), TC(1), T1...Tk, CRC1, CRC2. La donnée TL correspond par exemple à une longueur d'octet. La donnée T0 correspond à un format de donnée. Les données TA(1), TB(1) et TC(1) correspondent à des octets d'interface comme par exemple des éléments de configuration d'utilisateur modifiables, des codes appelés DS et DR, des codes appelés FWI et SFGI, et finalement des codes d'options de protocole. Les données CRC1 et CRC2 sont des codes de redondance cycliques utilisés pour la détection d'erreur. Les données T1...Tk correspondent à un stockage d'octets d'historique (historical bytes en anglais). Dans un exemple, ces octets de mémoire d'historiques sont utilisés pour représenter, autrement dit stocker, des paramètres associés au fonctionnement du dispositif 110 lors de la dernière communication que l'on souhaite pouvoir exploiter pour le procédé de débogage de la communication qui a été perturbée. Ces paramètres varient dans le temps en fonction de l'environnement ou en fonction de la proximité ou du type du deuxième dispositif 150, autrement dit les paramètres stockés dans la librairie sont dynamiques ou modifiables au cours de la vie du produit. Dans un exemple, T1 représente un état de configuration du premier dispositif 110 par exemple un temps de fin de trame (FDT en anglais). Dans un autre exemple, T2, T3 et T4 représentent une image du champ électromagnétique ou encore une image du courant induit au niveau du dispositif 110 lors de la dernière communication et ce avec plus ou moins de précision (T2 plus précis que T3 et T4 par exemple). Les paramètres associés au fonctionnement du dispositif 110 lors de la dernière communication sont par exemple stockés dans des registres liés aux adresse T1 à Tk. L'utilisation d'octets d'historique pour représenter, ou stocker temporairement ou de façon non-volatile les paramètres associés au fonctionnement du dispositif 110 lors de la dernière communication, permet de ne pas modifier l'agencement des trames définies par le protocole NFC tout en y intégrant des données utiles au débogage.

Lorsque la communication est interrompue ou perturbée, il est alors possible, avec le dispositif 160 par exemple, de remonter aux paramètres associés au fonctionnement du premier dispositif NFC 110 lors de la dernière communication en analysant la trame ATS.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, pour ce qui est du stockage des paramètres associés au fonctionnement du dispositif 110 lors de la dernière communication, il est envisageable de stocker ces paramètres à la fois dans une mémoire non-volatile et à la fois dans les octets d'historique de la trame ATS.

Enfin, la mise en oeuvre pratique des modes de réalisation et variantes décrits est à la portée de la personne du métier à partir des indications fonctionnelles données ci-dessus. En particulier, les paramètres associés au fonctionnement du premier dispositif NFC 110 lors de la dernière communication peuvent être stockés dans d'autres librairies, autres que la librairie RFlib et les octets d'historiques et éventuellement transmis dans une autre trame que la trame ATS. De plus, il est possible d'envisager de stocker des paramètres associés au fonctionnement qui soient de toute sorte comme d'autres paramètres physique e.g. un taux d'humidité ou des données relatives à l'heure à laquelle la dernière transaction a eu lieu. Il est en outre envisageable de stocker des paramètres de fonctionnement du dispositif 110 lors de communications ou de transactions postérieures à la dernière communication.

## Revendications

1. Procédé de débogage mis en oeuvre par un premier dispositif NFC (110) comprenant :
stocker, dans une mémoire du premier dispositif NFC (110), un ou plusieurs paramètres, associés au fonctionnement du premier dispositif (110) lors d'une communication avec un deuxième dispositif NFC (150) distant.

2. Procédé selon la revendication 1, dans lequel ladite mémoire est une mémoire volatile.

3. Procédé selon la revendication 2, dans lequel ladite mémoire est une mémoire d'historique.

4. Procédé selon la revendication 1, dans lequel ladite mémoire est une mémoire non volatile.

5. Procédé selon l'une quelconque des revendications 1 à 4, dans lequel lesdits un ou plusieurs paramètres sont des paramètres physiques.

6. Procédé selon la revendication 5, dans lequel lesdits un ou des paramètres physiques sont associés à une valeur d'un champ électromagnétique reçu par le premier dispositif (110) .

7. Procédé selon l'une quelconque des revendications 1 à 6, dans lequel lesdits un ou plusieurs paramètres associés au fonctionnement du premier dispositif (110) sont associés à un état de configuration du premier dispositif (110).

8. Procédé selon la revendication 7, dans lequel ledit état de configuration est choisi parmi un état d'horloge, une durée de fin de trame et une séquence temporelle.

9. Procédé selon l'une quelconque des revendications 1 à 8, comprenant :
- extraire de ladite mémoire lesdits un ou plusieurs paramètres associés au fonctionnement du premier dispositif (110) suite à la réception d'une requête (RATS) envoyée par le deuxième dispositif (150) distant.

10. Procédé selon la revendication 9, dans lequel lesdits un ou plusieurs paramètres extraits sont transmis vers le deuxième dispositif (150) dans une trame ATS.

11. Dispositif NFC comprenant un ou des circuits (122) configurés pour déterminer un ou plusieurs paramètres associés au fonctionnement du dispositif NFC (110) lors d'une communication avec un deuxième dispositif NFC (150) distant ;
le dispositif NFC (110) étant configuré pour mettre en oeuvre le procédé selon l'une quelconque des revendications 1 à 10.

12. Dispositif NFC selon la revendication 11, dans lequel lesdits un ou des circuits configurés pour déterminer un ou plusieurs paramètres associés au fonctionnement du premier dispositif NFC (110) sont choisis parmi un capteur délivrant une donnée relative à un champ électromagnétique venant du deuxième dispositif NFC (150) distant et un registre configuré pour enregistrer une alerte.

13. Système comprenant :
- un premier dispositif NFC (110) selon la revendication 11 ou 12 ;
- un deuxième dispositif NFC (150), distant du premier dispositif NFC (110).

14. Système selon la revendication 13, comprenant un dispositif (160) configuré pour capter le contenu d'une communication entre le premier dispositif NFC (110) et le deuxième dispositif NFC (150) et en extraire un ou plusieurs paramètres associés au fonctionnement du premier dispositif NFC (110).

15. Procédé de débogage d'un système selon la revendication 13 ou 14 comprenant :
- capter le contenu d'une communication entre un premier et un deuxième dispositif NFC (110, 150) avec un dispositif (160) configuré pour capter le contenu d'une communication entre le premier et le deuxième dispositifs NFC (110,150) ; et
- extraire lesdits un ou plusieurs paramètres de fonctionnement associés au fonctionnement dudit premier dispositif NFC (110) lors de la communication à partir du contenu capté.
